# EUROPEAN PATENT APPLICATION

(11) **EP 2 105 971 A1**
(43) Date of publication of application: **30.09.2009**
(21) Application number: 09155396.6
(22) Date of filing: 17.03.2009
(51) Int. Cl.: H01L 31/048, F24J 2/52, E04D 13/18

(54) **Pitched roof with solar panel holder**

(30) Priority: 17.03.2008 NL 2001380
(71) Applicant: Ubbink B.V., 6984 AA Doesburg (NL)
(72) Inventor: Van Schellebeek, Dirk Johannes, 6715 LK, EDE (NL)
(74) Representative: De Hoop, Eric

(57) **Abstract**

Pitched roof comprising elongated supports preferably extending horizontally and parallel to each other, and a solar panel holder including a solar panel on the supports, wherein the solar panel holder comprises a guttered plate cover on the supports and at least one elongated attachment profile between the solar panel and the guttered plate cover, wherein the guttered plate cover is undulatory having continuous gutters and flat wave tops extending in the pitch direction of the roof, and the attachment profile is provided with a flat back at the outer side and engagement members standing upright therefrom on which a coupling engages between the solar panel and the attachment profile, wherein the attachment profile extends on top of a flat wave top and with the flat back contacts said flat wave top in an abutting manner.

## Description

### BACKGROUND OF THE INVENTION

The invention relates to a pitched roof provided with a solar panel holder with a solar panel. Solar panel means a photovoltaic (PV) panel for electricity, as well as a solar collector for hot water.

A known pitched roof including solar panel holder is built up with a roof boarding on which vertical counterbattens and horizontal battens have been arranged. The solar panel holder comprises a covering part of corrugated metal plates arranged on the battens. The solar panels secured to the solar panel holder are slightly recessed with respect to the tiles around the holder, whereas precipitation can be properly discharged underneath the solar panels onto the lowermost row of tiles.

A drawback of the known solar panel holder is that in case of a large distance between the battens, or when there are no battens such as in case of a corrugated plate roof, the metal plates may sag under the weight of the solar panels and the striking wind, which may result in the solar panels getting detached. Weighting the metal plates themselves is undesirable however, as due to the increase of weight sagging is only reduced to a limited extend.

It is an object of the invention to provide a pitched roof including a solar panel holder, which in the context of the example given is suitable for spanning a relatively large distance between battens.

It is an object of the invention to provide a pitched roof including a solar panel holder that shows a nice finish on the roof.

It is an object of the invention to provide a pitched roof including a solar panel holder, of which the solar panel holder can be made using a limited range of parts.

### SUMMARY OF THE INVENTION

According to one aspect the invention provides a pitched roof comprising elongated supports preferably extending horizontally and parallel to each other, and a solar panel holder including a solar panel on the supports, wherein the solar panel holder comprises a guttered plate cover on the supports and at least one elongated attachment profile between the solar panel and the guttered plate cover, wherein the guttered plate cover is undulatory having continuous gutters and flat wave tops extending in the pitch direction of the roof, and the attachment profile is provided with a flat back at the outer side and engagement members standing upright therefrom on which a coupling engages between the solar panel and the attachment profile, wherein the attachment profile extends on top of a flat wave top and with the flat back contacts said flat wave top in an abutting manner.

The attachment profile extending with its flat back on top of the flat wave top may in a compact manner contribute to the bending stiffness of the solar panel holder, as a result of which with a slight increase of height a relatively large distance transverse or between the elongated supports can be spanned.

In one embodiment the attachment profile extends straight or centred on top of the flat wave top and preferably only contacts said wave top in an abutting manner. The attachment profile is then able to form a bending stiff unity in cooperation with the material of the wave top.

In one embodiment the flat back of the attachment profile contacts the flat wave top or wave tops in an abutting manner over substantially its full length, so that the gutters over said length can remain free for proper discharge of precipitation underneath the solar panel.

The attachment profile and the guttered plate cover may form a stiff unity when the attachment profile is connected to the flat wave top or wave tops.

Preferably the attachment profile is connected to the flat wave top or wave tops over substantially its full length in a scattered manner.

During the installation on the pitched roof the attachment profile can be secured to the guttered plate cover when the attachment profile is connected to the flat wave top with spot or point connections that are scattered or divided over substantially its full length.

In one embodiment thereof the spot or point connections are provided with blind rivets, such as pop rivets, extending through the flat back and the flat wave top. The holes necessary for that purpose for instance go through the flat wave top, as a result of which the gutters themselves can remain watertight.

The blind rivets preferably comprise a head abutting the flat back, so that the blind rivet connections can be short and as a result strong connections.

The protruded position of the solar panel with respect to the solar panel holder can be limited if the solar panel is situated on the attachment profile, preferably on its engagement members.

In one embodiment the engagement members comprise two side walls positioned parallel and spaced apart from each other and that stand upright from the flat back.

The side walls then comprise inner surfaces preferably facing each other and together with the flat back bounding an inner space of the attachment profile, wherein the inner surfaces from the flat back over the full raised height have an intermediate distance that substantially remains the same or increases. The inner surfaces then allow proper access of an attachment tool to the flat back. This may for instance be the punch head of an attachment tool for blind rivets.

In one embodiment the side walls extend over substantially the full length of the attachment profile, so that they may contribute to its bending stiffness over substantially the full length of the attachment profile.

The above-mentioned proper access of an attachment tool to the flat back can also be possible when the engagement members comprise an engagement edge for the coupling which edge is situated at an outer side of the side walls.

The coupling can be brought in coupled condition with oversight when the coupling comprises a top side enclosing engagement member which at the outside of the attachment profile engages over and onto the engagement members. The top side enclosing engagement member may moreover make a sliding of the coupling along the attachment profile possible in order to secure the solar panels at the correct location.

In one embodiment the coupling engages onto a circumferential edge of the solar panel, as a result of which the shadow effects on the active parts of the solar panel can remain limited.

In one embodiment the pitched roof comprises multiple adjacently positioned solar panels, wherein the coupling engages onto the meeting side edges of the solar panels. The same coupling can then be used for attaching several panels.

If the guttered plate cover comprises multiple guttered plates that partially overlap each other, the guttered plate cover can easily be adapted to the desired linear measure and breadth, particularly in existing roof situations where obstructions such as air ducts or chimneys already extending through the roof are present. For instance by sliding within the overlap or adapting only one of a row of overlapping guttered plates, the whole can be configured until reaching the desired width or final size.

The guttered plates can be temporarily anchored to the elongated support in order to slide them mutually into the correct final size, when the guttered plates are provided with a suspension hook projecting from the head edge or crosscut edge and engaging onto one of the elongated supports. After sliding or adjusting the guttered plates may for instance be secured to the horizontal supports.

Penetration of precipitation at the location where the suspension hook is attached, as far as present under the overlap at that location, can be counteracted when the suspension hook is attached to the guttered plate under a flat wave top.

In one embodiment that is limited as regards height, the guttered plate cover is formed having an angular cross-section, such as for instance a trapezoidal cross-section, such as a sheet pile wall profile. In case of a guttered plate cover having several overlapping guttered plates an angular cross-section is highly suitable for widening or narrowing the overlap between the plates.

In one embodiment the pitched roof comprises a roofing or roof covering on the supports, wherein the solar panel holder including solar panel is positioned within a recess in the roofing. As already stated the attachment profiles can make it possible with a slight increase of height to span a relatively large distance between the elongated supports, as a result of which the solar panel protrudes only slightly or even not at all from the roofing, which results in a fine look.

In one embodiment the guttered plate cover and/or the guttered plate and/or the attachment profile is made of aluminium or an aluminium alloy, preferably a seawater-proof aluminium alloy, preferably anodised and/or coated. Aluminium offers a proper stiffness with respect to specific gravity, as a result of which the collective weight of the solar panel holder can remain limited. Aluminium is furthermore fire resistant. Anodisation renders the aluminium durably weather-proof.

In one embodiment the tough roofing comprises tiles and/or corrugated plates.

The invention according to a further aspect, furthermore provides a pitched roof comprising elongated supports preferably extending horizontally and parallel to each other, an obstruction such as a discharge channel or dormer window protruding above the supports, and a solar panel holder including at least one solar panel, wherein the solar panel holder is made of a guttered plate cover of several guttered plates overlapping each other on the supports and several elongated attachment profiles between the solar panel and the guttered plate surface, wherein along the obstruction the overlapping guttered plates have been provided with a recess or have been narrowed or shortened or have been laid with an increased overlap for at that location allowing the obstruction through, and between the solar panel and the obstruction a dummy solar panel carried by the attachment profiles is placed which dummy solar panel along the obstruction has been provided with a recess or has been narrowed or shortened with respect to the main sizes of the solar panel for at that location allowing the obstruction through.

A dummy solar panel is a solar panel having substantially the same main sizes as the solar panel, which may substantially have the same look, but which is not suitable for converting sunlight into electricity or hot water like the solar panel does. The dummy panel can be made to size at relatively low cost as no active components are sawed through. The dummy panel ensures the connection between the solar panel and the obstruction, and therefore can be placed wherever desired. Tiles will for instance not be necessary at that location. The entire roof will acquire the fine look of being fully covered with solar panels. The overlapping guttered plates ensure a precipitation-proof sealing of the pitched roof. The guttered plate cover can be achieved using a limited size range of guttered plates, for instance using one size of guttered plates, wherein only at the location of the obstruction shortening takes place.

The invention furthermore relates to a solar panel holder intended and suitable for the pitched roof according to the invention.

The invention furthermore provides, according to a further aspect, a method for in situ building in a solar panel into a pitched roof, wherein the pitched roof comprises elongated supports extending horizontally and parallel to each other and a tough roofing on the supports, wherein the method comprises locally forming a recess in the roofing, arranging a guttered plate cover within the recess, wherein the guttered plate cover is undulatory having continuous gutters and flat wave tops extending in the pitch direction of the roof, placing an attachment profile on the guttered plate cover, wherein the attachment profile at the outer side comprises a flat back and engagement members standing upright therefrom and the attachment profile is brought straight or centred on top of a flat wave top and with the flat back is brought in abutting contact only with said flat wave top.

According to the method the attachment profile is brought straight or centred on top of a flat wave top and with the flat back is brought in abutting contact only with said flat wave top, which is done in situ. The attachment profile in a compact manner contributes to the stiffness of the solar panel holder, as a result of which a slight increase in height enables to span a relatively large distance between the elongated supports.

In a quick manner the attachment profile can be connected in situ to the flat wave top, preferably using spot or point connections, preferably rivets, scattered over its full length.

The aspects and measures described in this description and the claims of the application and/or shown in the drawings of this application may where possible also be used individually. Said individual aspects may be the subject of divisional patent applications relating thereto. This particularly applies to the measures and aspects that are described per se in the sub claims.

### SHORT DESCRIPTION OF THE DRAWINGS

The invention will be elucidated on the basis of a number of exemplary embodiments shown in the attached drawings, in which:
Figure 1 shows an isometric view of a pitched roof including solar panels according to the invention in a first configuration;
Figures 2A and 2B show an isometric side view of the roof according to figure 1 and an isometric top view of details thereof, in a first stage of building in a guttered plate cover, respectively;
Figures 3A-3C show an isometric side view of the roof according to figure 2A and two details thereof as encircled in figure 3A, in a finishing stage of building in the guttered plate cover, respectively;
Figure 4A-4C show an isometric side view of the gutter surface according to figure 3A, on which a solar panel is attached, an isometric bottom view of a detail thereof and a cross-section of a solar panel coupling, respectively;
Figure 5 shows an isometric side view of the pitched roof including solar panels according to the invention in a second configuration; and
Figures 6-8 show a number of successive stages in building up according to the second configuration of figure 5.

### DETAILED DESCRIPTION OF THE DRAWINGS

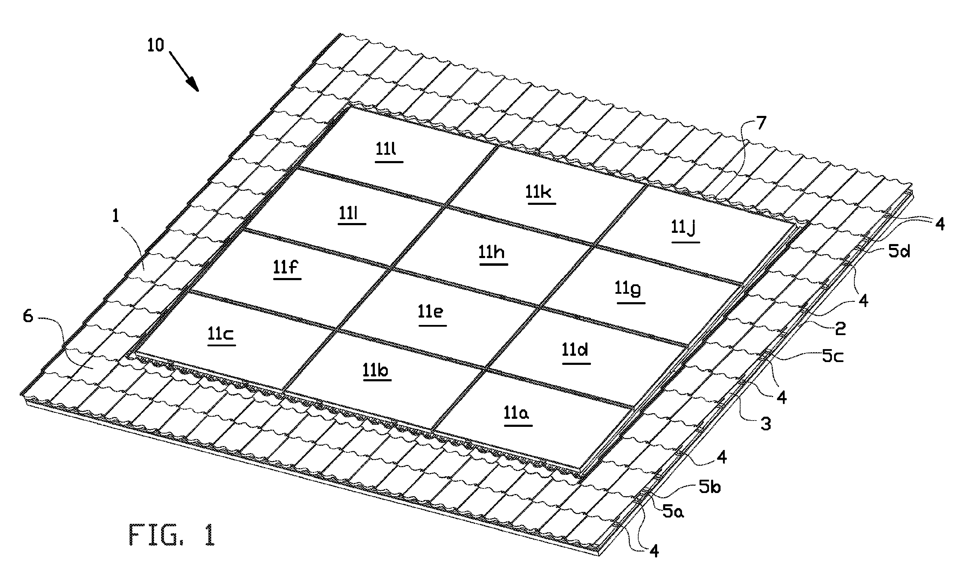

Figure 1A shows a pitched roof 1 that has been built up having a straight, sloping roof boarding 2 on which vertical counterbattens 3 and regularly divided, horizontal battens 4 have been arranged. The elongated battens or supports 4 form suspensions locations for the roofing, for instance tiles 6. The tiles 6 leave a rectangular recess 7 open within which a solar panel assembly 10 including solar panels or photovoltaic (PV) panels 11a-11l according to the invention has been accommodated.

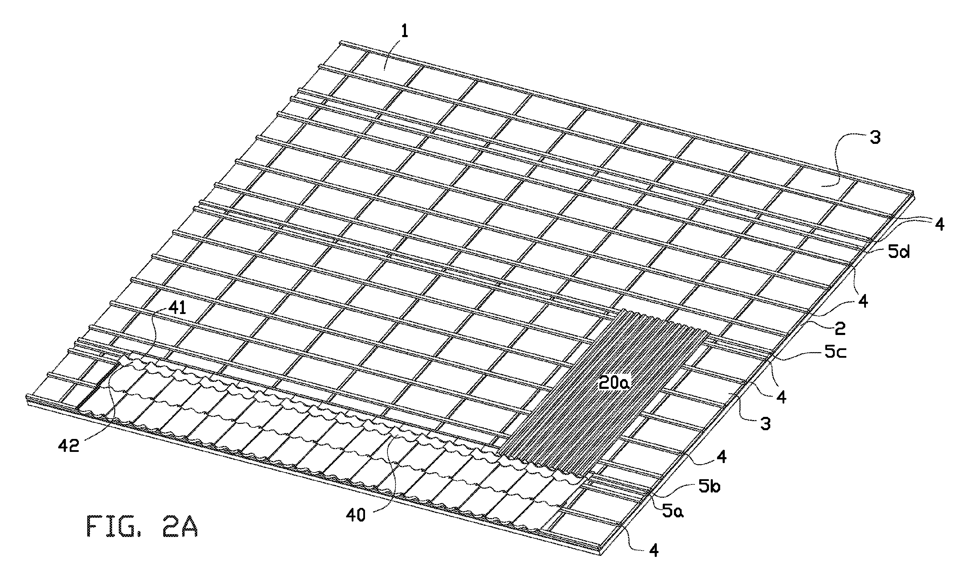

The solar panel assembly 10 is built up in modules and installed in situ in the project. Figures 2A, 3A and 4A show the successive stages of the installation.

Figure 2A shows the sloping roof boarding 2, wherein apart from a lower area a large number of tiles 6 have been removed in order to create room for the solar panel assembly 10 and to make it possible to temporarily be able to walk on the roof boarding 2. Between a number of battens 4 a first up to and including a fourth reference lath 5a-5d have been arranged for correct attachment of parts to be further discussed below of the solar panel assembly 10. Over the row of tiles 6 that has been left behind a bottom flashing 40 has been arranged. The bottom flashing 40 is made of synthetic material, and for instance available under the trade name Ubiflex. The bottom flashing 40 comprises an attachment strip 41 which is attached to the second reference lath 5b, and a connection strip 42 that connects to the undulating shape of the tiles 6. A first guttered plate 20a is placed on the battens 4. The guttered plate 20a sits over the attachment strip 41, and with the upper side and lower side supports exactly on the first and third reference lath 5a, 5c, respectively.

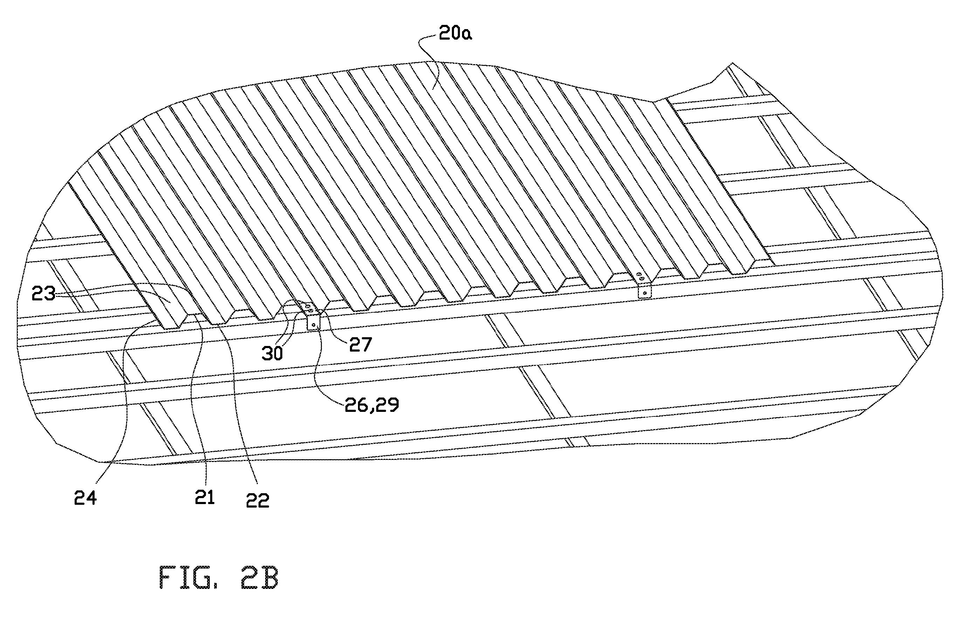

The guttered plate 20a is shown in detail from above in figure 2B. The guttered plate 20a is made of a set aluminium plate, that has subsequently been anodised in order to make the guttered plate 20a more weather proof. The guttered plate 20a in cross-section has a sheet pile wall profile, having continuous straight or flat top strips 21 and continuous bottom strips 22 that are connected to each other by means of continuous, straight, inclined sides 23, which for instance are at an angle of 40-45 degrees. At the longitudinal sides a narrower upward end strip 24 and a downward end strip 25 are provided. The amplitude of the guttered plate 20a is about 20 millimetres. Trapezoidal gutters are thus provided which continue over the full length of the guttered plate 20a and end open. The plate may have a slight thickness, for instance less than 1 millimetre, such as 0.6 millimetre.

The first guttered plate 20a is suspended by means of a suspension hook 26 from the third reference lath 5c. The suspension hook 26 comprises an attachment strip 27 which is secured in the middle of the upper edge below a bottom strip 22 by means of blind rivets 30. The attachment strip 27 is continued in a turned transverse strip 29 that engages onto the side of the third reference lath 5c. The suspension hook 26 first of all ensures a temporary locking of the guttered plate 20a on the roof boarding, until it is screwed against the reference lath 5c with the transverse strip 29 and a number of screws that are not further shown and are sealed with a rubber ring have been inserted through the top strips 21 and secured in a number of battens 4.

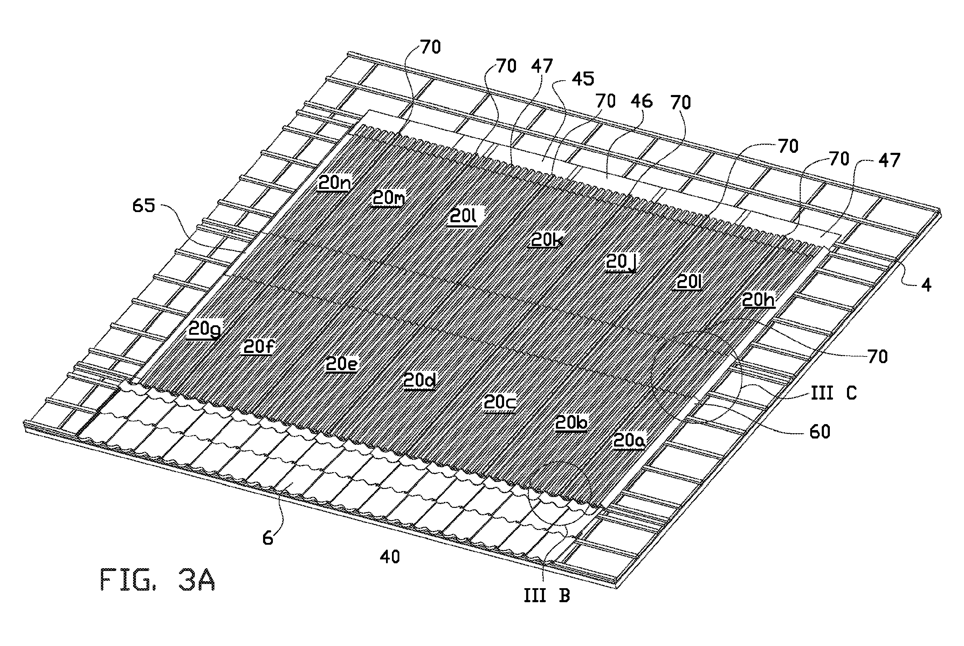

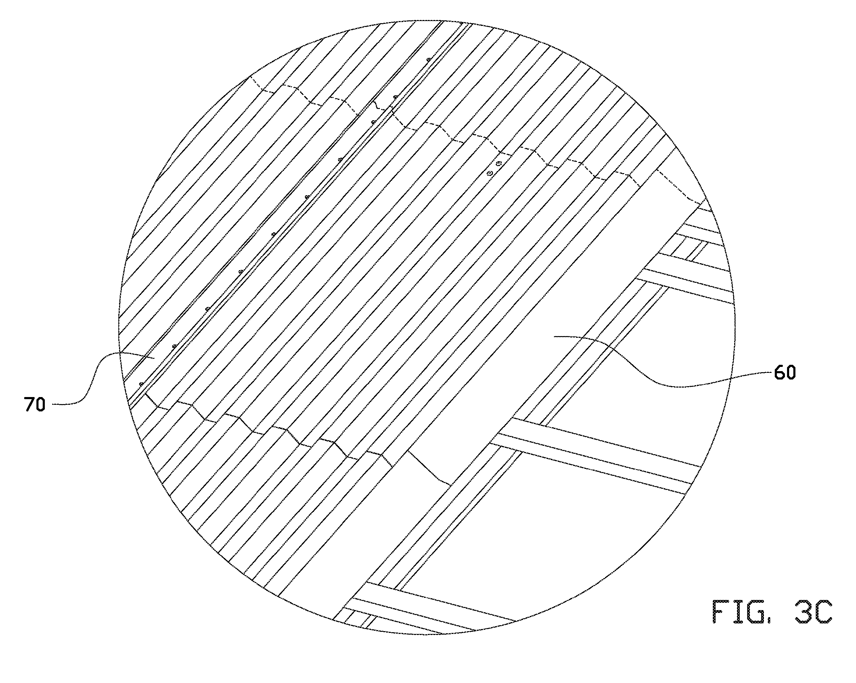

As shown in figure 3A subsequently a first row with a second up to and including seventh guttered plate 20b-20g and a second row with an eighth up to and including fourteenth guttered plate 20h-20n is placed, which as regards length and cross-section are identical to the first guttered plate 20a. The eighth up to and including fourteenth guttered plate 20h-20n are suspended from the fourth reference lath 5d by the suspension hooks 26. The guttered plates 20a-20n overlap each other tile-wise at the edge areas in order to realise a water discharging unity. Depending on the desired circumferential dimensions the last guttered plates, in this example the seventh and fourteenth guttered plate 20g, 20n, can be sawed off over the length in order to make them narrower, or a larger overlap is formed.

As shown in figure 3A along the outer sides synthetic concealed gutters 60, 65 are arranged which via the eight and first or fourteenth and seventh guttered plate 20h, 20a, 20n, 20g, respectively, dewater onto the bottom flashing 40.

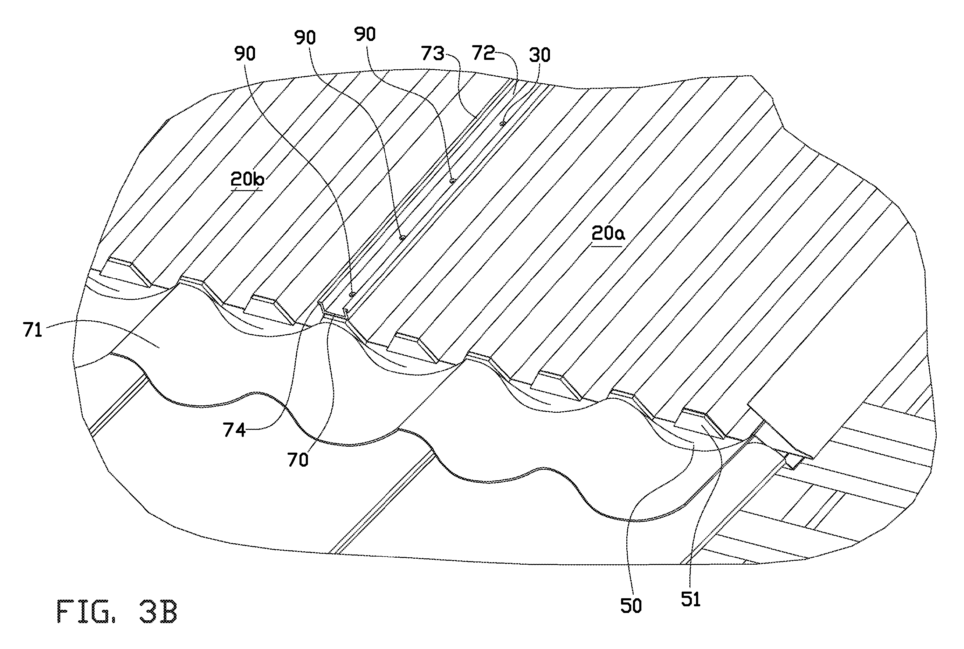

As shown in figure 3A over the upper edge of the eight up to and including fourteenth guttered plate 20h-20n an upper flashing 45 is arranged. The upper flashing 45 is made of synthetic material, and also comprises an attachment strip 46 that is secured to a batten 4, and a connection strip 47 over the top guttered plates 20h-20n that connects to the undulating shape of said guttered plates 20h-20n. As shown in figure 3B between the bottom flashing 40 and the lowermost guttered plates 20a-20g one or several filler strips 50 with raised filler pieces 51 are arranged, which at the bottom side connect to the waves of the guttered plates 20a-20g.

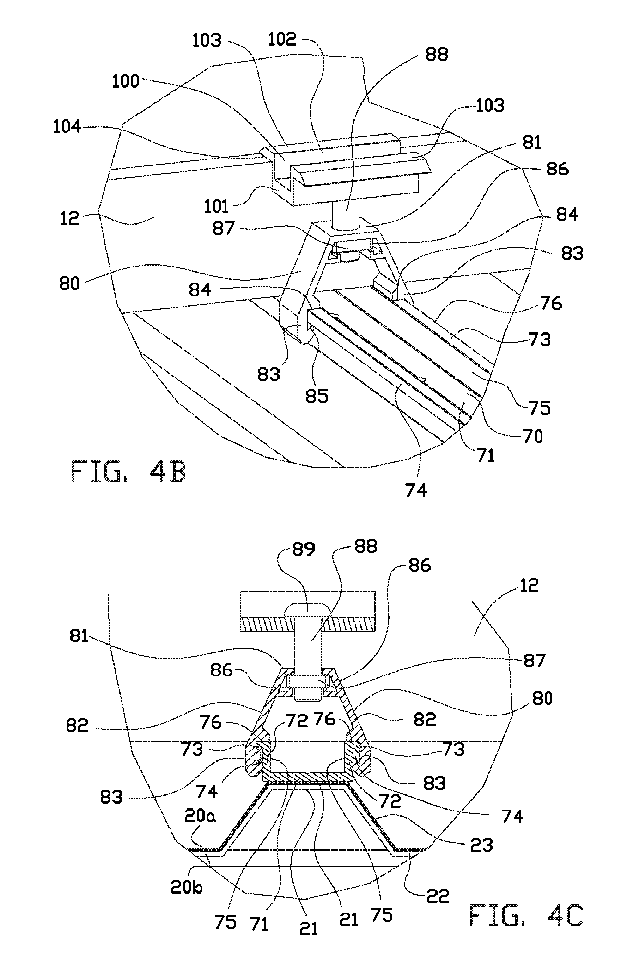

Subsequently, as shown in figures 3A-3C a number of attachment profiles 70 are attached to the guttered plates 20a-20n, in this example above the overlaps of the guttered plates 20a-20n. The attachment profiles 70 are made of aluminium and in this example have subsequently been anodised in order to render them more weather-proof. An attachment profile is also shown in detail in figures 4B and 4C.

At the lower or outer side the attachment profiles 70 comprise a continuous, flat back strip 71 having continuous straight side walls 72 that stand upright therefrom. The side walls 72 have straight inner surfaces 75 that in this example are straight opposite each other. Alternatively said inner surfaces 75 deflect from each other from the back strip 71. At the upper side a continuous projecting upper wall 73 has been formed. The upper wall 73 at the upper side is provided with a continuous first base plane 76 extending parallel to the back strip 71, and at the bottom side is provided with a first engagement surface 74 facing the side wall 72. The cross-section of the attachment profiles 70 is constant over the full length of the attachment profiles 70, like an extrusion profile.

Each attachment profile 70 is centred with the back strip 71 straight on top of one flat top strip 21, and with the back strip 71 only has abutting or butt contact therewith over substantially its full length. The attachment profiles 70 extend parallel to the main plane of the guttered plate cover formed by the guttered plates 20a-20n. A number of holes 90 have been pre-drilled through the back strip 71 and the top strip 21 over the length of the attachment profile 70, in which holes blind rivets 30 have been placed. The inner surfaces 75 that are straight or deflect from each other make a proper access of the punch head of an attachment tool for blind rivets or another attachment tool possible.

The completed part of the solar panel assembly 1 forms a solar panel holder which after replacing the tiles 6 around it will seal the pitched roof 1 from precipitation again.

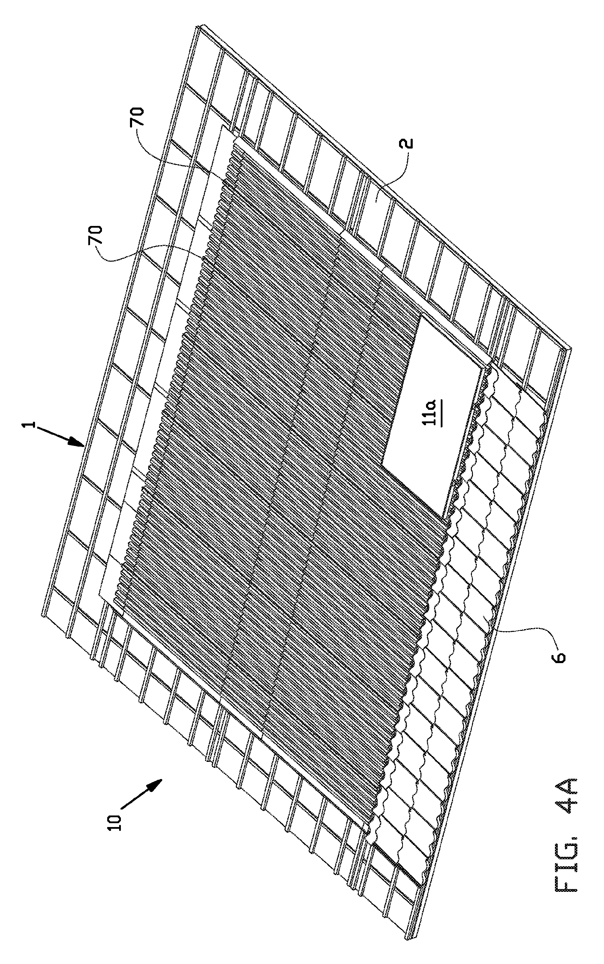

Subsequently, as shown in figure 4A, a first solar panel 11a is laid on the attachment profiles 70. The solar panel 11a is provided with a metal circumferential frame 12 which supports on two attachment profiles 70, such that both longitudinal halves of the solar panel 11a are situated centred on an attachment profile 70. In this example the first solar panel 11a (and the solar panels consecutive thereto) has been laid in landscape orientation, which means that the longest length extends horizontally. Alternatively the portrait orientation can be laid. In the latter case the attachment profiles 70 may also extend horizontally, over the consecutive tops or top strips 21 which then coincide with the pre-drilled holes in the attachment profiles 70. The attachment profiles 70 then have abutting or butt contact only with the back strips 71 over substantially the full length.

As shown in figures 4B and 4C the solar panel 11a is secured to the circumferential frame with an aluminium coupling 80. The coupling 80 comprises a base part 81 having a chamber 86 in which a screw plate 87 is confined, and two straight arms 82 deflecting therefrom having an engagement member 83 at the ends. The engagement member 83 comprises a straight second base plane 84, for temporary cooperation with the first base plane 84, and a second engagement surface 85 facing the engagement member for durable cooperation with the first engagement surface 74. At the upper side the coupling 80 comprises a coupling member 100 comprising a bottom plate 101, two upright side walls 102 and upper walls 103 deflecting therefrom and having a third engagement surface 104 that are situated against and on, respectively, the circumferential frame 12. A screw 88 extends through the bottom wall 101 and the screw plate 87, as a result of which by tightening the head 89 the coupling 80 is tensioned.

In the same way the other solar panels 11b-11l are placed, wherein the meeting longitudinal edges of the circumferential frames 12 per attachment location are secured with the same coupling 80. With both longitudinal sides extending transverse to the attachment profiles 70, in this example with the opposite sides of the circumferential frame 12, the solar panels 11a-11l directly contact the attachment profiles 70, wherein the main plane of the solar panels 11a-11l is oriented parallel to the main plane spanned by the attachment profiles 70 and parallel to the main plane of the guttered plate cover. The solar panels 11a-11l, the attachment profiles 70 and the guttered plates 20a-20p form a compact and as a result relatively low stacking of components, which transverse to the main plane can be sufficiently stiff to support its own weight with an acceptable sagging.

The modular build-up of the solar panel assembly 1 makes it possible to configure it to the specific possibilities or dimensional limitations. For instance in case of a longer or higher roof more guttered plates can be arranged adjacent to and/or above one another, supplemented with longer concealed gutters 60 and/or flashings 40, 45. This offers room to several solar panels 11.

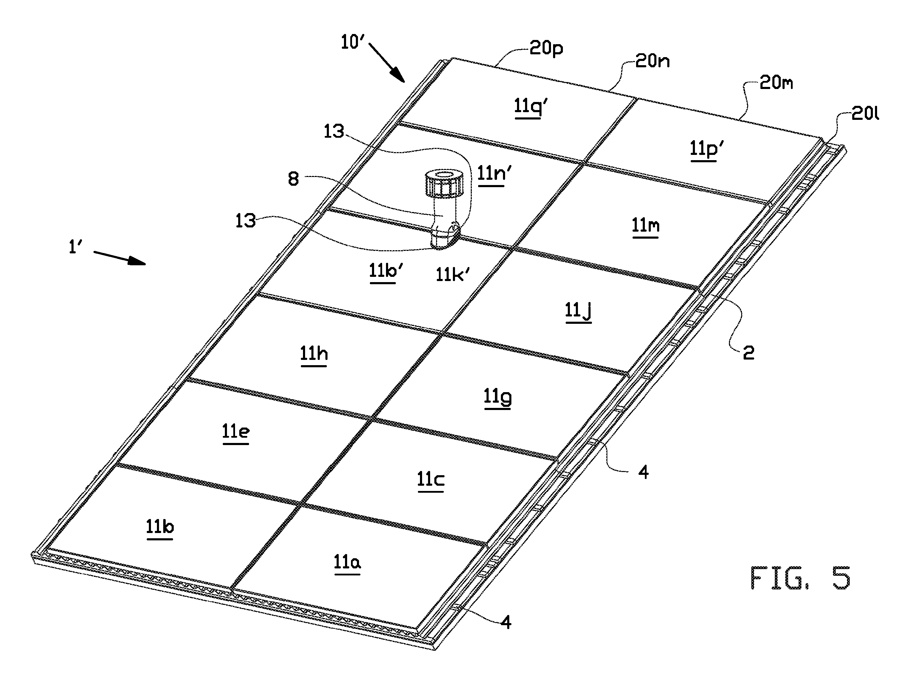

The modular build-up of the solar panel assembly 10 makes it particularly possible to configure towards an existing roof situation, where obstructions such as a dormer window or discharge channel are already present, or where a complete tiled roof is removed and the roof for aesthetic reasons should acquire a look that is fully covered by solar panels. A second configuration of the solar panel assembly 10' is therefore shown in figures 5-8.

The pitched roof 1' according to figures 5-8 is fully stripped of tiles, as a result of which only the counterbattens 3 and the battens 4 have been left in the project as supporting parts. The pitched roof 1' is provided with a protruding obstruction, in this example a ventilation duct 8 in the middle of the roof 1.

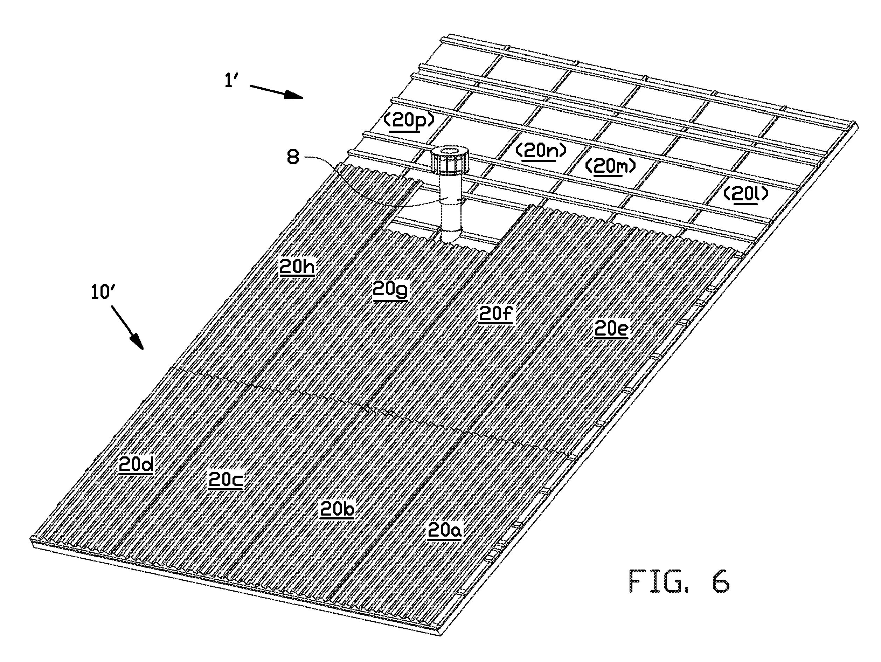

As shown in figure 6, a first row of guttered plates 20a, 20b, 20c, 20d is laid on the battens 4 from the bottom up, again tile-wise, subsequently a second row of guttered plates 20e, 20f, 20g',20h as described above, wherein the third guttered plate 20g' has been shortened at the bottom side in order for its bottom edge to sit at the same level as the bottom edges of the other guttered plates 20e-20h, and with the upper edge sit near the ventilation duct 8.

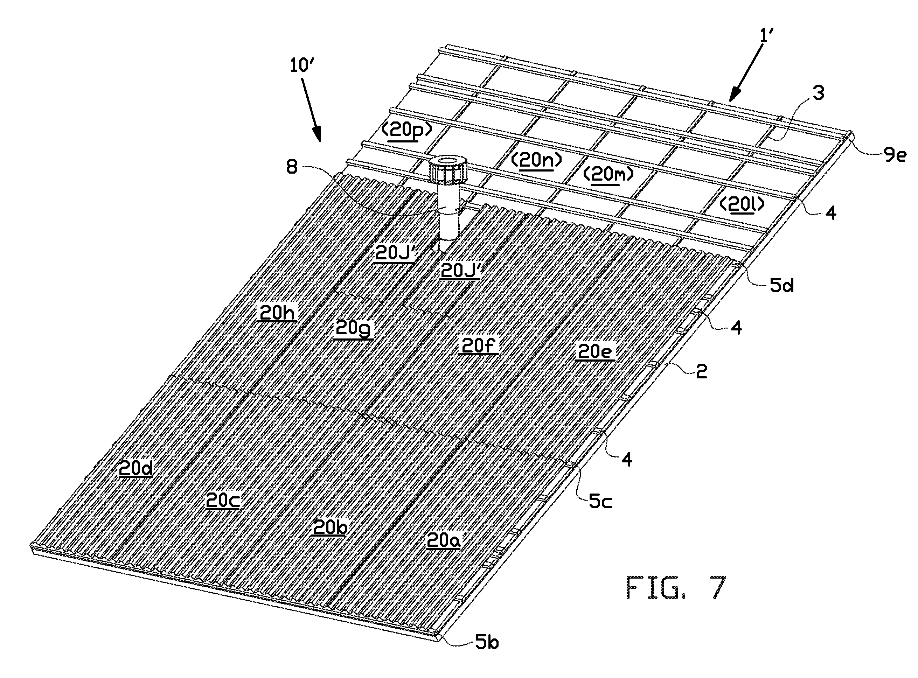

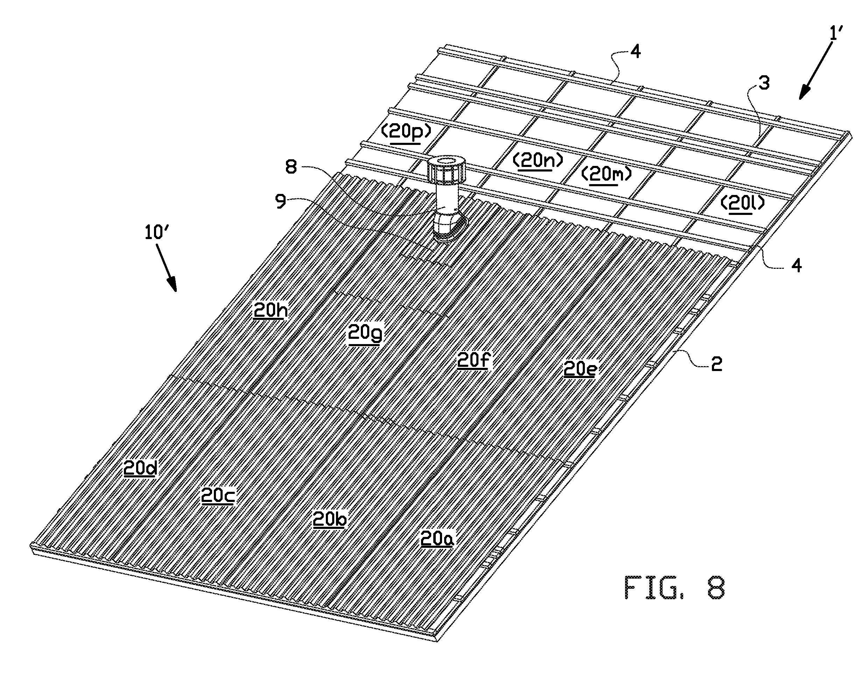

As shown in figure 7 on either side of the ventilation duct 8 a reduced guttered plate 20i is laid, which at the bottom side overlaps the guttered plate 20g', and which with the upper edge sits at the same level as the upper edges of the other guttered plates 20e, 20f and 20h in the row. Subsequently, as shown in figure 8, a covering part 9 is slid over the ventilation duct 8, of which covering part the bottom side connects to the undulating shape of the guttered plates. The covering part 9 overlaps again at the bottom side, and connects with its upper edge to the upper edges of the other guttered plates 20e, 20f, 20g', 20h in the row. Subsequently without further dimensional adaptations a third row of guttered plates 20l, 20m, 20n, 20p is laid, which at the upper side extend up to the ridge 14 of roof 1. The guttered plates 20a-20p and the covering part 9 again form a tile-wise watertight sealing unity for the roof 1', which has been achieved using a limited size range of guttered plates.

Subsequently the attachment profiles 70 are arranged, and as shown in figure 5, three rows of operational solar panels 11a, 11b, 11d, 11e, 11g, 11h, and two operational solar panels 11j, 11m that fit in the framework or mosaic of the solar panels at a broad distance with respect to the ventilation duct 8 or the ridge 14. On either side of the ventilation duct 8 non-operational dummy panels 11k', 11n', which nonetheless look like operational solar panels and are provided with a recess 13, are laid in the framework or mosaic. Likewise along the ridge 14 two dummy panels 11p', 11q' that have been sawn off in longitudinal direction are placed. The entire roof thus acquires the aesthetic look of a solar panel roof, as a result of which narrow strips of tiles can be dispensed with.

The above description is included to illustrate the operation of preferred embodiments of the invention and not to limit the scope of the invention. Starting from the above explanation many variations that fall within the spirit and scope of the present invention will be evident to an expert.

## Claims

1. Pitched roof comprising elongated supports preferably extending horizontally and parallel to each other, and a solar panel holder including a solar panel on the supports, wherein the solar panel holder comprises a guttered plate cover on the supports and at least one elongated attachment profile between the solar panel and the guttered plate cover, wherein the guttered plate cover is undulatory having continuous gutters and flat wave tops extending in the pitch direction of the roof, and the attachment profile is provided with a flat back at the outer side and engagement members standing upright therefrom on which a coupling engages between the solar panel and the attachment profile, wherein the attachment profile extends on top of a flat wave top and with the flat back contacts said flat wave top in an abutting manner.

2. Pitched roof according to claim 1, wherein the attachment profile extends straight or centred on top of the flat wave top and preferably contacts said wave top in an abutting manner only.

3. Pitched roof according to claim 1 or 2, wherein the attachment profile with the flat back contacts the flat wave top or wave tops in an abutting manner over substantially its full length.

4. Pitched roof according to any one of the preceding claims, wherein the attachment profile is connected to the flat wave top or wave tops, wherein the attachment profile preferably is connected to the flat wave top or wave tops over substantially its full length in a scattered manner.

5. Pitched roof according to claim 4, wherein the attachment profile is connected to the flat wave top with spot or point connections that are scattered over substantially its full length, wherein the spot or point connections preferably are provided with blind rivets extending through the flat back and the flat wave top, wherein the blind rivets preferably comprise a head abutting the flat back.

6. Pitched roof according to any one of the preceding claims, wherein the solar panel is situated on the attachment profile, wherein the solar panel preferably is situated on the engagement members.

7. Pitched roof according to any one of the preceding claims, wherein the engagement members comprise two side walls positioned parallel and spaced apart from each other and that stand upright from the flat back, wherein the side walls preferably comprise inner surfaces that face each other and together with the flat back bound an inner space of the attachment profile, wherein the inner surfaces from the flat back over the full raised height have an intermediate distance that substantially remains the same or increases.

8. Pitched roof according to claim 7, wherein the engagement members comprise an engagement edge for the coupling that is situated at an outer side of the side walls.

9. Pitched roof according to any one of the preceding claims, wherein the coupling comprises a top side enclosing engagement member which at the outer side of the attachment profile engages over and onto the engagement members.

10. Pitched roof according to any one of the preceding claims, wherein the coupling engages onto a circumferential edge of the solar panel.

11. Pitched roof according to any one of the preceding claims, wherein the guttered plate cover comprises multiple guttered plates that partially overlap each other, wherein the guttered plates preferably are provided with a suspension hook projecting from the head edge or crosscut edge and engaging onto one of the elongated supports, wherein the suspension hook preferably is attached to the guttered plate under a flat wave top.

12. Pitched roof according to any one of the preceding claims, wherein the guttered plate cover is formed having an angular cross-section, such as for instance a trapezoidal cross-section, such as a sheet pile wall profile.

13. Pitched roof comprising elongated supports preferably extending horizontally and parallel to each other, an obstruction such as discharge channel or dormer window protruding above the supports, and a solar panel holder including at least one solar panel, wherein the solar panel holder comprises a guttered plate cover of several guttered plates overlapping each other on the supports and several elongated attachment profiles between the solar panel and the guttered plate cover, wherein the overlapping guttered plates along the obstruction have been provided with a recess or have been narrowed or shortened or have been laid with an increased overlap for at that location allowing the obstruction through, and between the solar panel and the obstruction a dummy solar panel carried by the attachment profiles is placed which dummy solar panel along the obstruction has been provided with a recess or has been narrowed or shortened with respect to the main sizes of the solar panel for at that location allowing the obstruction through.

14. Method for in situ building in a solar panel into a pitched roof, wherein the pitched roof comprises elongated supports extending horizontally and parallel to each other and a tough roofing on the supports, wherein the method comprises locally forming a recess in the roofing, arranging a guttered plate cover within the recess, wherein the guttered plate cover is undulatory having continuous gutters and flat wave tops extending in the pitch direction of the roof, placing an attachment profile on the guttered plate cover, wherein the attachment profile at the outer side comprises a flat back and engagement members standing upright therefrom and the attachment profile is brought straight or centred on top of a flat wave top and with the flat back is brought in abutting contact only with said flat wave top.

15. Method according to claim 14, wherein the attachment profile is connected in situ to the flat wave top, preferably using spot or point connections, preferably rivets, scattered over its full length.
